# EUROPÄISCHE PATENTSCHRIFT

(11) **EP 0 875 641 B1**
(45) Veröffentlichungstag und Bekanntmachung des Hinweises auf die Patenterteilung: **21.01.2004**
(21) Anmeldenummer: 98107880.1
(22) Anmeldetag: 29.04.1998
(51) Int. Cl.: E04F 13/06, B29C 65/08

(54) **Putzleiste mit daran befestigtem Armierungsmaterial**
Plaster bead with reinforcing material attached thereto
Baguette pour plâtre avec matériau de renforcement attaché à celle-ci

(30) Priorität: 30.04.1997 DE 19718450; 27.01.1998 DE 19803034
(43) Veröffentlichungstag der Anmeldung: 04.11.1998
(73) Patentinhaber: Braun, August, 8200 Schaffhausen (CH)
(72) Erfinder: Braun, August, 8200 Schaffhausen (CH)
(74) Vertreter: Klunker . Schmitt-Nilson . Hirsch

(56) Entgegenhaltungen:
- DE-A- 3 604 714
- GB-A- 2 296 735

## Beschreibung

Die Erfindung bezieht sich auf eine Putzleiste aus Kunststoff, an der ein netzartiges Armierungsmaterial aus Kunststoff oder Glasseidengewebe zum Einbetten in oder unter einer Putzschicht, insbesondere einer Putzschicht auf einer Wärmedämmung einer Gebäudewand, mittels einer Ultraschall-Schweißverbindung, befestigt ist.

Um netzartiges Armierungsmaterial an einer Putzleiste zu befestigen, arbeitet man bisher in der Praxis meist entweder mit dem Ankleben oder mit einer Art Klemmbefestigung zwischen dem Grundkörper der Putzleiste und einer Ergänzungsleiste. Die erstgenannte Möglichkeit führt zu einer Befestigung mit nicht immer befriedigender Festigkeit; außerdem sind das Aufbringen und das Abbindenlassen des Klebers komplizierende Schritte. Die zweitgenannte Möglichkeit ist in der Herstellung aufwending, weil eine gesonderte Ergänzungsleiste erforderlich ist.

Eine Putzleiste der eingangs genannten Art mit einer Ultraschall-Schweißverbindung zwischen der Putzleiste und dem Armierungsmaterial ist aus GB 2 296 735 A bekannt.

Die Erfindung liegt die Aufgabe zugrunde, eine Putzleiste verfügbar zu machen, die sich durch eine Kombination von sicherer, fester Befestigung des Armierungsmaterials und wenig aufwendiger Herstellbarkeit auszeichnet.

Zur Lösung dieser Aufgabe ist die Putzleiste erfindungsgemäß dadurch gekennzeichnet,
daß das Armierungsmaterial mittels einer Ultraschall-Schweißverbindung, bei deren Erstellung das Armierungsmaterial zwischen der Putzleiste und mindestens einem Kunststoffstrang zwischengelegt ist, mit der Putzleiste verbunden ist.

Das Ultraschallschweißen ist eine Verbindungsart, bei der die für das Verbinden der beiden Verbindungspartner erforderlichen Erwärmung an dem Verschweißungsbereich durch die Einwirkung von Ultraschallschwingungen erzeugt wird. Aus den Entwicklungsarbeiten, die zu der Erfindung geführt haben, hat sich ergeben, daß die Hinzunahme mindestens eines Kunststoffstrangs bei der Ultraschall-Schweißverbindung zur Befestigung des Armierungsmaterials an der Putzleiste zu einer in kurzer Zeit ausführbaren Ultraschall-Schweißverbindung mit hoher Verbindungsfestigkeit führt.

Vorzugsweise weist die Ultraschall-Schweißverbindung mindestens einen weiteren Kunststoffstrang auf der dem Armierungsmaterial entgegengesetzten Seite der Putzleiste auf. Diese Maßnahme ist besonders vorteilhaft, wenn die Putzleiste in dem Bereich der Ultraschall-Schweißverbindung Durchbrechungen besitzt, so daß der weitere Kunststoffstrang eine Erhöhung der Stabilität der Schweißverbindung ergibt.

Am problemlosesten läßt sich das Ultraschallschweißen durchführen, wenn die Putzleiste und der Kunststoffstrang bzw. der weitere Kunststoffstrang aus dem gleichen Kunststoff oder zumindest aus hinsichtlich der Schmelztemperatur ähnlichen Kunststoffen bestehen. Die Putzleiste und der Kunststoffstrang bzw. der weitere Kunststoffstrang bestehen vorzugsweise aus thermoplastischen Kunststoffen. Das Armierungsmaterial ist, wie bekannt, vorzugsweise ein Glasseidengewebe. Die spezielle Ausgestaltung des bei der Erfindung eingesetzten Ultraschallschweißens macht es möglich, eine Putzleiste aus thermoplastischem Kunststoff mit dem materialmäßig extrem davon unterschiedlichen Glasseidengewebe als Armierungsmaterial sicher zu verbinden.

In den meisten Fällen erstreckt sich das an der Putzleiste befestigte Armierungsmaterial im wesentlichen über die Gesamtlänge der Putzleiste und hat - quer zu dieser Längsrichtung gemessen - eine Breite von 10 bis 40 cm. Diese Breite ist so bemessen, daß großflächiges, netzartiges Armierungsmaterial für die Putzschicht überlappend an das an der Putzleiste befindliche Armierungsmaterial angeschlossen werden kann.

Als Materialien am meisten bevorzugt sind Glasseidengewebe für das Armierungsmaterial und Polyvinylchlorid für die Putzleiste und den mindestens einen Kunststoffstrang bzw. den mindestens einen weiteren Kunststoffstrang. Aber auch andere Materialkombinationen lassen sich problemlos verarbeiten, wenn man die weiter vom geschilderten Gesichtspunkte berücksichtigt.

Man kann vorzugsweise mit einem oder mit mehreren Kunststoffsträngen bzw. weiteren Kunststoffsträngen arbeiten, welche die Konfiguration einer Rundschnur haben. Alternativ läßt sich mit Kunststoffsträngen anderen Querschnitts, z.B. flachstreifigen Querschnitts, arbeiten. Ferner ist es möglich, mit einer Verbundanordnung mehrerer Kunststoffstränge zu arbeiten, z.B. zwei oder mehr Strängen, die durch einen flacheren Steg miteinander verbunden sind.

Mit einem Kunststoffstrang bzw. einem weiterem Kunststoffstrang läßt sich eine hinreichend stabile Befestigung des Armierungsmaterials an der Putzleiste erzeugen. Mit zwei Kunststoffsträngen bzw. zwei weiteren Kunststoffsträngen, vorzugsweise in gewissem Abstand nebeneinander, erreicht man in vielen Fällen ein Optimum zwischen Herstellungsaufwand und sicherer Befestigung. Wenn die Putzleiste - im Querschnitt betrachtet - zwei Schenkel hat, sieht man vorzugsweise zwei Kunststoffstränge bzw. zwei weitere Kunststoffstränge pro Schenkel vor.

Vorzugsweise hat mindestens einer der Kunststoffstränge und/oder mindestens einer der weiteren Kunststoffstränge eine derartige Höhe, daß er als Abzugskante beim Aufbringen einer Spachtelschicht dienen kann. Der Kunststoffstrang bzw. der weitere Kunststoffstrang übernimmt damit neben seiner Rolle bei der Erstellung der Schweißverbindung eine Abzugskantenfunktion; in vielen Fällen kann man infolgedessen auf das Erzeugen einer mit der Basis-Putzleiste integralen Abzugskante verzichten. Bevorzugte Höhen sind 0,5 bis 5 mm, höchst vorzugsweise 1 bis 3 mm.

Die erfindungsgemäß Putzleiste läßt sich in vielen Bereichen "am Bau" einsetzen, wo an der Putzleiste befestigtes Armierungsmaterial zum Einbetten in oder unter einer Putzschicht nützlich ist. Als erste, besonders bevorzugte Ausbildung sei die Ausbildung als Eckwinkelleiste genannt, bei der an einem Schenkel oder an beiden Schenkeln an der Putzleiste befestigtes Armierungsmaterial wegführt. Als zweite, besonders bevorzugte Ausbildung sei die Ausbildung als Anputzleiste für den Übergang zwischen der Putzschicht und einem Fensterrahmen, Türrahmen oder dergleichen (z.B. Stein, Dachstuhlbalken etc.) genannt. Eine beispielhafte Anputzleiste, allerdings ohne erfindungsgemäße Befestigung des Armierungsmaterials an der Anputzleiste, ist in DE 37 39 912 A1 beschrieben. Als dritte, besonders bevorzugte Ausbildung sei die Ausbildung als Tropfnasen-Leiste für den unteren Rand einer von oben nach unten verlaufenden Putzschicht genannt. Diese Ausbildungen, allerdings ohne erfindungsgemäße Befestigung des Armierungsmaterials an der Putzleiste, und andere Putzleistenausbildungen mehr sind in der WO 97/04197 beschrieben. Der Gesamtinhalt dieser Druckschrift, insbesondere hinsichtlich der Ausbildungsmöglichkeiten der Putzleisten für die unterschiedlichsten Einsatzfelder und hinsichtlich möglicher Gestaltungsdetails der Putzleisten, wird hiermit ausdrücklich zum Offenbarungsgehalt der vorliegenden Anmeldung gemacht.

Wenn die Putzleiste nur einen Schenkel hat, an dem Armierungsmaterial befestigt ist und von dort wegführt, kann das Armierungsmaterial entweder auf der Innenseite des Schenkels (d.i. die der zu verputzenden Bauwerksstruktur zugewandte Seite) oder auf der Außenseite des Schenkels (d.i. die in die gleiche Richtung wie die Sichtfläche der aufzubringenden Putzschicht weisende Seite) befestigt sein. Analoges gilt für Winkelleisten mit zwei Schenkeln. In diesem Fall kann man entweder mit zwei Armierungsmaterialabschnitten arbeiten, von denen einer an dem einen Schenkel und der andere an dem anderen Schenkel befestigt ist. Alternativ kann man mit einem durchgehenden Armierungsmaterialabschnitt arbeiten, der entweder außen über den Winkelscheitel der Winkelleiste geführt ist oder innen um die Winkelecke der Winkelleiste herumgeführt ist. Außerdem wird die Möglichkeit erwähnt, eine Putzleiste mit einem längs der Putzleiste verlaufenden Überstand auszubilden, der als Abzugskante für eine Spachtelschicht, in welche das Armierungsmaterial eingebettet wird, oder für eine untere Putzschicht oder - bei entsprechend hoher Ausbildung - für eine Putzschicht insgesamt dienen kann.

Weiterer Gegenstand der Erfindung ist, nach einem zweiten Aspekt, ein Verfahren zum Befestigen eines netzartigen Armierungsmaterials aus Kunststoff an einer Putzleiste aus Kunststoff, wobei das Armierungsmaterial auf die Putzleiste aufgelegt und darauf mindestens ein Kunststoffstrang aufgelegt wird und wobei dann die Putzleiste, das Armierungsmaterial und der mindestens eine Kunststoffstrang durch Ultraschallschweißen miteinander verbunden werden. Alle Details, die in der vorliegenden Anmeldung primär im Zusammenhang mit dem fertigen Produkt (Putzleiste mit daran befestigtem Armierungsmaterial) beschrieben werden, stellen auch bevorzugte Ausgestaltungen des erfindungsgemäßen Herstellungsverfahrens dar.

Die Erfindung und bevorzugte Ausgestaltungen der Erfindung werden nachfolgend anhand von zeichnerisch dargestellten Ausführungsbeispielen noch näher erläutert. Es zeigt:
- Fig. 1: eine Putzleiste mit zwei daran befestigten Armierungsmaterialabschnitten, angebracht an einer Wärmedämmung eines Gebäudes, im horizontalen Querschnitt;
- Fig. 2: eine Putzleiste mit daran befestigtem Armierungsmaterial, angebracht an einem Fensterrahmen, im horizontalen Querschnitt;
- Fig. 3: eine Putzleiste mit darauf gelegtem Armierungsmaterial und darauf gelegtem Kunststoffstrang vor dem Ultraschallschweißen, im Längsschnitt;
- Fig. 4: die Bestandteile des Ausführungsbeispiels gemäß Fig. 3, aber nach Durchführung des Ultraschallschweißens;
- Fig. 5: die Putzleiste von Fig. 1 ebenfalls im Querschnitt, aber abgewandelt bei der Ausbildung einer Abzugskante.

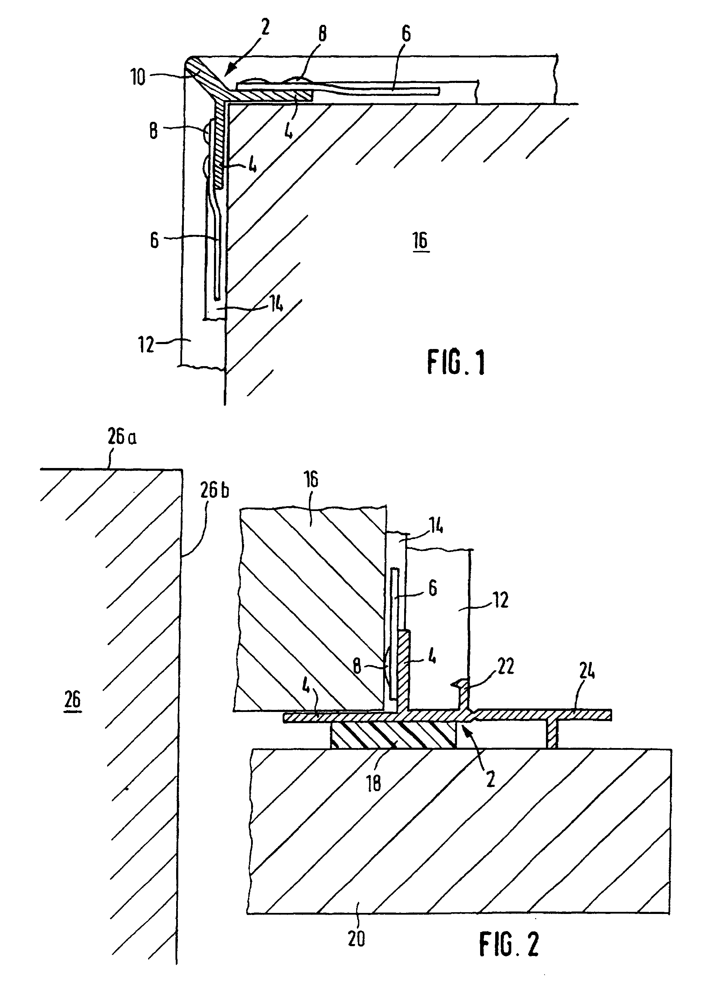

Die in Fig. 1 gezeigte Putzleiste 2 hat die Konfiguration einer Eckwinkelleiste. An jedem Schenkel 4 der Putzleiste 2 ist außenseitig ein Armierungsmaterialabschnitt 6 befestigt. Jeder Armierungsmaterialabschnitt 6 besteht aus Glasseidengewebe, das in Fig. 1 der Einfachheit halber als flache Lage gezeichnet ist.

Die Befestigung jedes Armierungsmaterialabschnitts 6 an dem betreffenden Schenkel 4 der Putzleiste 2 ist durch eine Ultraschall-Schweißverbindung vorgenommen, die mit zwei parallel im Abstand nebeneinander in Längsrichtung der Putzleiste 2 verlaufenden Kunststoffsträngen 8 vorgenommen worden ist. Jeder Kunststoffstrang 8 hat sich bei der Durchführung der Ultraschallschweißung deformiert und ist teilweise durch die Netzöffnungen des Armierungsmaterials 6 hindurchgetreten und hat sich dort durch Zusammenschmelzen mit dem Material des betreffenden Schenkels 4 der Putzleiste 2 verbunden.

Die Putzleiste 2 hat einen am Winkelscheitel unter etwa 45° nach außen vorstehenden Überstand 10, dessen freies Ende als Abzugskante für eine Putzschicht 12 dienen kann.

Mit den Innenseiten ihrer Schenkel 4 ist die Putzleiste 2 auf eine Außenecke einer Wärmedämmung, z.B. aus geschäumten Polystyrol, aufgesetzt und dort mittels Spachtelmasse 14 befestigt. Auch die Armierungsmaterialabschnitte 6 sind, wo sie von den Schenkeln 4 fortführen, mittels der Spachtelmasse 14 an der Wärmedämmung 16 befestigt.

Das Armierungsmaterial 6 ist praktisch vollständig in der Spachtelmasse 14 eingebettet, so daß es eher unter der Putzschicht 12 als eigentlich in der Putzschicht 12 eingebettet ist. Es gibt aber die alternative Möglichkeit, nur mit einer Putzschicht 12 und ohne die Spachtelmasse 14 zu arbeiten, so daß das Armierungsmaterial 6 streng gesprochen in der Putzschicht 12 eingebettet ist.

Die in Fig. 2 gezeichnete Putzleiste 2 ist als Anputzleiste ausgebildet. Die Putzleiste 2 ist mit Hilfe eines Schaumstoff-Klebebands 18 an einem Fensterrahmen befestigt. Rechtwinklig zu dem Schenkel 4 der Putzleiste 2, an dem das Klebeband 18 sitzt, verläuft ein Schenkel 4, an dem innenseitig (d.h. der Gebäudewand bzw. der Wärmedämmung auf der Gebäudewand zugewandt) ein Armierungsmaterial 6 durch Ultraschallschweißung befestigt ist. Bei diesem Beispiel ist mit nur einem Kunststoffstrang 8 beim Ultraschallschweißen gearbeitet worden.

Außenseitig (d.h. wegweisend von der Gebäudewand bzw. der Wärmedämmung auf der Gebäudewand) von dem Schenkel 4, an dem das Armierungsmaterial 6 befestigt ist, besitzt die Putzleiste 2 einen winkelförmigen Putzaufnahmeraum 20, der beim dargestellten Ausführungsbeispiel durch einen weniger hohen, parallel zum letztgenannten Schenkel 4 verlaufenden Schenkel 22 teilweise zu einer auf einer Seite hinterschnittenen U-Form ergänzt ist. Außerdem erkennt man eine im wesentlichen parallel zu dem Fensterrahmen 20 verlaufende Schutzlasche 24 zur Anbringung einer Schutzfolie für die Fensterfläche.

Mit dem Bezugszeichen 16 ist eine Wärmdämmung z.B. aus geschäumtem Polystyrol angedeutet. Außerdem ist eine Gebäudewand 26 angedeutet, und zwar mit einer Ecke zwischen der von dem Gebäude wegweisenden Außenseite 26a und der dem Fensterrahmen 20 zugewandten Laibungsseite 26b.

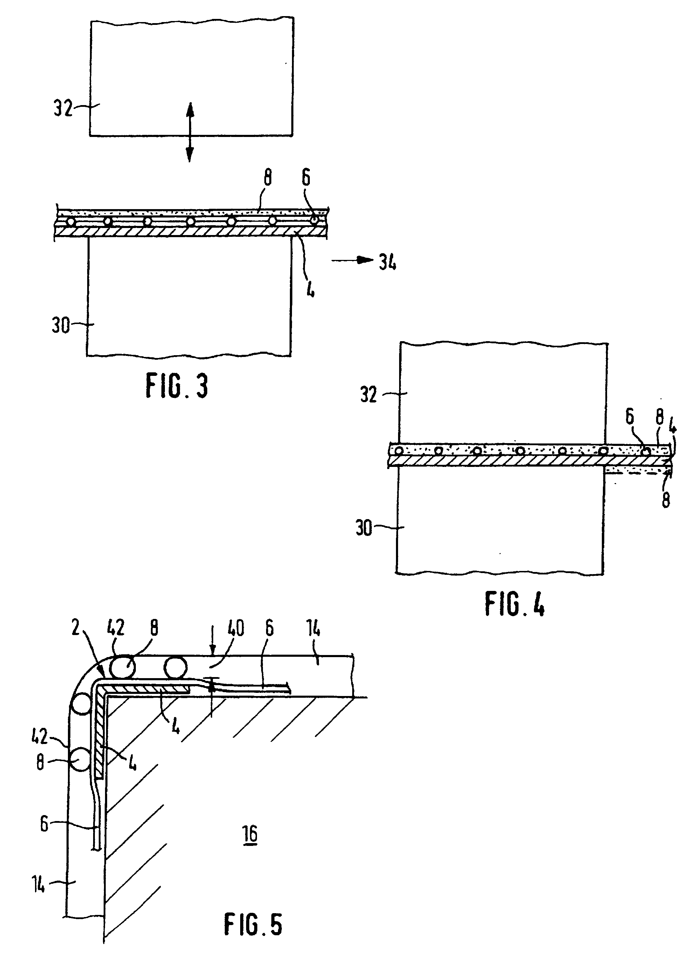

In Fig. 3 ist veranschaulicht, wie die erfindungsgemäße Ultraschall-Schweißverbindung in der Praxis erzeugt werden kann. Die gezeichnete Darstellung ist z.B. ein Längsschnitt durch einen der Schenkel 4 der Putzleiste 2 von Fig. 1.

Zur Herstellung der Ultraschall-Schweißverbindung wird eine Teillänge der Putzleiste 2 mit dem Schenkel 4, an dem der Arbeitsvorgang vorgenommen werden soll, waagrecht oben auf die Oberseite einer Schweißunterlage 30 angeordnet. Darauf wird eine Teillänge eines Armierungsmaterials 6 mit seinem Randbereich aufgelegt. Darauf werden - beim betrachteten Beispiel - zwei Kunststoffstränge 8 (von denen einer längs geschnitten in Fig. 3 erscheint) aufgelegt. Dann wird eine Schweißsonotrode 32 mit ihrer waagrechten Unterseite auf die beschriebene Materialanordnung abgesenkt und wird die Ultraschallerzeugung aktiviert. Unter der Wirkung der Ultraschallwellen schmilzt das Polyvinylchlorid des betreffenden Schenkels 4 der Putzleiste 2 an seiner Oberseite und der Kunststoffstrang 8 an seiner Unterseite, und zwar beides in erster Linie lokal begrenzt dort, wo durch Aufeinanderliegen von Verschweißungspartnern durch Grenzflächenreibung, die durch die Ultraschallwellen erzeugt wird, besonders viel Wärme entsteht. Das Material des Schenkels 4 und des Kunststoffstrangs 8 vereinigen sich durch die Netzöffnungen des Armierungsmaterials 6 hindurch, so daß sich danach die in Fig. 4 schematisch gezeichnete Situation ergibt.

Nach dem Deaktivieren der Ultraschallwellen wird die Schweißsonotrode 32 noch für kurze Zeit gegen das auf der Schweißunterlage 30 liegende Produkt angepreßt gehalten, bis der Verschweißungsbereich bis unter die Schmelztemperatur abgekühlt ist. Danach wird die Schweißsonotrode 32 angehoben.

Typischerweise wird mit Ultraschallwellen im Bereich von 20 bis 40 kHz und mit einer Aktivierungszeit der Ultraschallwellen im Bereich von 1 s gearbeitet.

Nachdem, wie beschrieben, eine Teillänge des Produkts (d.h. Putzleiste mit daran befestigtem Armierungsmaterial) erzeugt worden ist, wird das Produkt für knapp eine weitere Teillänge in Richtung des Pfeils 34 weiterbewegt. Danach erfolgen erneut die beschriebenen Schritte des Ultraschallverschweißens. Es versteht sich, daß dieses schrittweise Weiterbewegen und die beschriebenen, einzelnen Schritte des Ultraschallverschweißens automatisiert ablaufen. Das Armierungsmaterial 6 und die Kunststoffstränge 8 werden dabei selbsttätig von Vorratsrollen abgezogen.

Wenn man eine Eckwinkelleiste mit daran befestigten Armierungsmaterialabschnitten herstellen will, kann man die Schweißunterlage 30 und die Schweißsonotrode 32 so ausbilden, daß an beiden Schenkeln 4 gleichzeitig eine Ultraschallverschweißung durchgeführt wird.

In Fig. 4 ist ganz rechts mit unterbrochenen Linien angedeutet, wie das Produkt aussieht, wenn mit mindestens einem weiteren Kunststoffstrang 8 an der Unterseite des Schenkels 4 gearbeitet wird.

Bei den beschriebenen Ausführungsbeispielen war das Armierungsmaterial 6 ein Glasseidengewebe und bestand die Putzleiste 2 sowie die Kunststoffstränge 8 aus Polyvinylchlorid.

Die in Fig. 5 dargestellte Putzleiste 2 unterscheidet sich von der in Fig. 2 dargestellten Putzleiste 2 dadurch, daß sie keinen aus dem Material der Schenkel 4 gefertigten Überstand 10 besitzt. Vielmehr sind die vier Kunststoffstränge 8 gezielt dafür ausgebildet, als Abzugskanten 42 bei der Aufbringung der Spachtelmassenschicht 14 zu dienen. Die Kunststoffstränge 8 haben eine größere Höhe 40 als bei dem Ausführungsbeispiel gemäß Fig. 1. Außerdem hat man vorzugsweise dafür gesorgt, daß die Kunststoffstränge 8 eine entlang der Schenkel 4 recht genau gleichbleibende Höhe 40 haben, z. B. indem man die Putzleiste 2 bei noch weichen Kunststoffsträngen 8 unter einer Kalibrierungsrolle durchlaufen läßt. Außerdem ist die Besonderheit gezeichnet, daß das Armierungsmaterial 6 einstückig um die Außenecke der Putzleiste 2 herumgeführt ist.

## Patentansprüche

1. Putzleiste (2) aus Kunststoff, an der ein netzartiges Armierungsmaterial (6) aus Kunststoff oder Glasseidengewebe zum Einbetten in oder unter einer Putzschicht (12), insbesondere einer Putzschicht (12) auf einer Wärmedämmung (16) einer Gebäudewand (26), mittels einer Ultraschall-Schweißverbindung befestigt ist,
**dadurch gekennzeichnet,**
**daß** das Armierungsmaterial (6) mittels einer Ultraschall-Schweißverbindung, bei deren Erstellung das Armierungsmaterial (6) zwischen der Putzleiste (2) und mindestens einem Kunststoffstrang (8) zwischengelegt ist, mit der Putzleiste (2) verbunden ist.

2. Putzleiste nach Anspruch 1,
**dadurch gekennzeichnet,**
**daß** die Ultraschall-Schweißverbindung mindestens einen weiteren Kunststoffstrang (8) auf der dem Armierungsmaterial (6) entgegengesetzten Seite der Putzleiste (2) aufweist.

3. Putzleiste nach Anspruch 1 oder 2,
**dadurch gekennzeichnet,**
**daß** der Kunststoffstrang (8) und/oder der weitere Kunststoffstrang (8) die Konfiguration einer Rundschnur oder einer Verbundanordnung mehrere Rundschnüre nebeneinander hat.

4. Putzleiste nach mindestens einem der Ansprüche 1 bis 3,
**dadurch gekennzeichnet,**
**daß** zwei Kunststoffstränge (8) und/oder zwei weitere Kunststoffstränge (8) nebeneinander vorgesehen sind.

5. Putzleiste nach mindestens einem der Ansprüche 1 bis 4,
**dadurch gekennzeichnet,**
**daß** das Armierungsmaterial (6) ein Glasseidengewebe ist und daß die Putzleiste (2) und der Kunststoffstrang (8) und/oder der weitere Kunststoffstrang (8) aus PVC (Polyvinylchlorid) bestehen.

6. Putzleiste nach mindestens einem der Ansprüche 1 bis 5.
**dadurch gekennzeichnet,**
**daß** es eine Eckwinkelleiste ist, bei der an einem Schenkel (4) oder an beiden Schenkeln befestigtes Armierungsmaterial (6) wegführt.

7. Putzleiste nach mindestens einem der Ansprüche 1 bis 5,
**dadurch gekennzeichnet,**
**daß** es eine Anputzleiste für den Übergang zwischen der Putzschicht (12) und einem Fensterrahmen (20), Türrahmen oder dgl. ist.

8. Putzleiste nach mindestens einem der Ansprüche 1 bis 5,
**dadurch gekennzeichnet,**
**daß** es eine Tropfnasen-Leiste für den unteren Rand einer von oben nach unten verlaufenden Putzschicht ist.

9. Putzleiste nach mindestens einem der Ansprüche 1 bis 8,
**dadurch gekennzeichnet,**
**daß** mindestens einer der Kunststoffstränge (8) und/oder mindestens einer der weiteren Kunststoffstränge (8) eine derartige Höhe (40) hat, daß er als Abzugskante (42) beim Aufbringen einer Spachtelschicht dienen kann.

10. Putzleiste nach Anspruch 9,
**dadurch gekennzeichnet,**
**daß** die Höhe (40) 0,5 bis 5 mm, vorzugsweise 1 bis 3 mm, beträgt.

## Claims

1. A plastering fillet (2) of plastics material, having attached thereto, by means of an ultrasonic welding connection, a net-like reinforcing material (6) of plastics material or glass fibre tissue to be embedded in or underneath a plaster layer (12), in particular a plaster layer (12) on a thermal insulation (16) of a building wall (26),
**characterized in that** reinforcing material (6) is connected to said plastering fillet (2) by means of an ultrasonic welding connection, with said reinforcing material (6) being interposed between said plastering fillet (2) and at least one plastics strand (8) when the connection is made.

2. The plastering fillet of claim 1,
**characterized in that** said ultrasonic welding connection has at least one additional plastics strand (8) on the side of the plastering fillet (2) opposite the reinforcing material (6).

3. The plastering fillet of claim 1 or 2,
**characterized in that** said plastics strand (8) and/or said additional plastics strand (8) has the configuration of a round cord or a composite arrangement of a plurality of round cords beside each other.

4. The plastering fillet of at least one of claims 1 to 3,
**characterized in that** two plastics strands (8) and/or two additional plastics strands (8) are provided beside each other.

5. The plastering fillet of at least one of claims 1 to 4,
**characterized in that** said reinforcing material (6) is a glass fibre tissue and **in that** said plastering fillet (2) and said plastics strand (8) and/or said additional plastics strand (8) consist of PVC (polyvinyl chloride).

6. The plastering fillet of at least one of claims 1 to 5,
**characterized in that** said plastering fillet is a corner fillet with attached reinforcing material (6) extending away from one or both legs (4).

7. The plastering fillet of at least one of claims 1 to 5,
**characterized in that** it is a plastering fillet for the transition between the plaster layer (12) and a window frame (20), door frame or the like.

8. The plastering fillet of at least one of claims 1 to 5,
**characterized in that** it is a drop nose fillet for the lower edge of a plaster layer extending in up-down direction.

9. The plastering fillet of at least one of claims 1 to 8,
**characterized in that** at least one of said plastics strands (8) and/or at least one of said additional plastics strands (8) is of such a height (40) that it can serve as a smoothing edge (42) during application of a filler layer.

10. The plastering fillet of claim 9,
**characterized in that** said height (40) is 0.5 to 5 mm, preferably 1 to 3 mm.

## Revendications

1. Baguette pour crépi (2), en matière plastique, à laquelle est fixé , au moyen dune soudure par ultrasons, un matériau de renforcement (6) en forme de treillis en matiére plastique ou en tissue en fibre de verre pour enrobage dans ou sous une couche de crépi (12), en particulier une couche de crépi située sur une isolation thermique (16) d'une paroi de bâtiment (26),
**caractérisée en ce que**
le matériau de renforcement (6) est relié à la baguette pour crépi (2) au moyen d'une soudure par ultrasons, lors de la réalisation de laquelle le matériau de renforcement (6) est intercalé entre la baguette pour crépi (2) et au moins un boudin (8) en matière plastique.

2. Baguette pour crépi selon la revendication 1,
**caractérisée en ce que**
la soudure par ultrasons présente au moins un autre boudin (8) en matière plastique sur le côté de la baguette pour crépi (2) opposé au matériau de renforcement (6).

3. Baguette pour crépi selon la revendication 1 ou 2,
**caractérisée en ce que**
le boudin (8) en matière plastique et/ou l'autre boudin (8) en matière plastique possèdent la configuration d'un cordon rond ou de plusieurs cordons ronds disposés les uns à côté des autres et reliés entre eux.

4. Baguette pour crépi selon au moins l'une des revendications 1 à 3,
**caractérisée en ce que**
deux boudins (8) en matière plastique et/ou deux autres boudins (8) en matière plastique sont disposés les uns à côté des autres.

5. Baguette pour crépi selon au moins l'une des revendications 1 à 4,
**caractérisée en ce que**
le matériau de renforcement (6) est un tissu en fibrede verre et **en ce que** la baguette pour crépi (2) et le boudin (8) en matière plastique et/ou l'autre boudin (8) en matière plastique sont constitués de PVC (chlorure de polyvinyle).

6. Baguette pour crépi selon au moins l'une des revendications 1 à 5,
**caractérisée en ce qu'**
il s'agit d'une baguette d'angle à partir de laquelle le matériau de renforcement (6) fixé à une branche (4) ou aux deux branchent s'éloigne.

7. Baguette pour crépi selon au moins l'une quelconque des revendications 1 à 5,
**caractérisée en ce qu'**il' s'agit d'une baguette couvre-joint pour la transition entre la couche de crépi (12) et le cadre d'une fenêtre (20), le cadre d'une porte ou similaire.

8. Baguette pour crépi selon au moins l'une quelconque des revendications 1 à 5,
**caractérisée en ce qu'**
il s'agit d'une baguette formant larmier pour le bord inférieur d'une couche de crépi s'étendant du haut vers le bas.

9. Baguette pour crépi selon au moins l'une quelconque des revendications 1 à 8,
**caractérisée en ce qu'**
au moins un des boudins (8) en matière plastique et/ou au moins un des autres boudins (8) en matière plastique possèdent une hauteur (40) telle qu'ils peuvent servir d'arête à tirer (42) lors de l'application d'une couche d'enduit.

10. Baguette pour crépi selon la revendication 9,
**caractérisée en ce que**
la hauteur (40) a une valeur de 0,5 à 5 mm, de préférence de 1 à 3 mm.
